# EUROPEAN PATENT SPECIFICATION

(11) **EP 4 520 294 B1**
(45) Date of publication and mention of the grant of the patent: **22.04.2026**
(21) Application number: 23195500.6
(22) Date of filing: 05.09.2023
(51) Int. Cl.: A61C 17/22, A46B 15/00, A61C 17/34

(54) **PERSONAL CARE DEVICE**
KÖRPERPFLEGEVORRICHTUNG
DISPOSITIF DE SOINS PERSONNELS

(43) Date of publication of application: 12.03.2025
(60) Divisional application: 26154790.5
(73) Proprietor: Braun GmbH, 61476 Kronberg im Taunus (DE)
(72) Inventor: THUNOT, Andre, 61476 Kronberg (DE)
(74) Representative: P&G Patent Germany

(56) References cited:
- EP-A2- 2 420 204
- US-A1- 2009 241 276
- US-A1- 2015 230 898
- US-A1- 2015 297 327
- US-A1- 2023 066 642

## Description

### FIELD OF THE INVENTION

The present disclosure is concerned with a personal care device comprising a handle section and a detachable head section, where the handle section comprises a drive unit for driving at least a portion of the head section into motion, and a controller for providing a periodic driving signal at a motor of the drive unit.

### BACKGROUND OF THE INVENTION

It is generally known that information about the attachment state of a repeatedly attachable and again detachable head section of a personal care device can support further functionality of the personal care device and/or can be utilized to improve user experience when using the personal care device. Document US 11 058 525 B2 generally discusses the detection of an attachment action or of a detachment action by analyzing motor signals caused by the detachment or attachment action. The attachment state detection discussed therein requires that the motor signals are always monitored, i.e., also when the motor is not operating. This is due to the fact that the attachment action or the detachment action itself is to be identified based on an effect these actions have on the motor. Further prior art is exemplified by US 2009/241276 A1.

It is hence an object to provide a personal care device where, inter alia, the determination of an attachment state of a detachable head section of the personal care device can be determined without a need to monitor the motor signals even in a switched off state of the personal care device.

### SUMMARY OF THE INVENTION

In accordance with at least one aspect, a personal care device is proposed in accordance with claim 1. The dependent claims are concerned with preferred embodiments of the invention as defined by claim 1.

### BRIEF DESCRIPTION OF THE DRAWINGS

The present disclosure will be further elucidated by a detailed description of example embodiments and with reference to figures. In the figures
- Fig. 1: is a depiction of an example personal care device realized as an electric toothbrush comprising a handle section and a detachably attached head section;
- Fig. 2: is a schematic depiction of components of a personal care device in accordance with the present disclosure;
- Fig. 3A: is a schematic depiction of a periodic driving signal over time and of two different periodic motor response signals over time;
- Fig. 3B: is a schematic depiction of three different weighted periodic driving functions over time;
- Fig. 4: is a depiction of a measurement curve of phase shift values between a periodic driving signal and a periodic motor response signal over time while a head section was repeatedly attached and detached from a handle section of a personal care device; and
- Fig. 5: is a depiction of measured phase shift values for three different types of head sections in dependence on the overall weight factor.

### DETAILED DESCRIPTION OF THE INVENTION

In the context of the present description "personal care" shall mean the nurture (or care) of the skin and of its adnexa (i.e., hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. Terms in brackets imply an optional feature. This shall not exclude that the proposed personal care device may have a more pronounced benefit in one or several of these nurturing or device areas than in one or several other of these areas. In the present description, an electric toothbrush was chosen to represent a personal care device. To the extent in which the details are not specific for an electric toothbrush, the proposed technology and concepts can be used in any other personal care device.

The present disclosure is concerned with a personal care device having a handle section and a head section that is repeatedly attachable to and again detachable from the handle section. A plurality of different head sections and a single handle section to which one of the different head sections can be selectively attached form a personal care kit in accordance with the present disclosure. The handle section allows grasping the personal care device with a hand. The head section(s) may comprise one or several structures relevant for providing a personal care treatment, e.g., one or several filaments, filament tufts, elastomeric elements, massage pads, blades, light sources and/or tweezers etc. The personal care treatment will be provided by the user at a personal care area, e.g., the oral cavity for a toothbrush or the lower face region for a shaver.

The personal care device further comprises a drive unit having a motor for driving a portion of the head section or the complete head section into motion relative to the handle section, and a controller for providing a periodic driving signal at the motor. The periodic driving signal is used to provide an adjustable energy level to the motor and the periodic driving signal can be scaled by increasing or decreasing a weighting factor to adjust the energy level. In operation, the motor produces a measurable periodic motor response signal such as a motor current, a voltage across the motor, a voltage between a motor terminal and a reference voltage, or a signal induced by the motor in a sensor etc. The frequency of the periodic motor response signal may in particular be identical with the frequency of the periodic driving signal, which may naturally be the case as both periodic signals are related with each other, i.e., the periodic driving function causes the periodic motor response signal.

The controller is structured and/or arranged for determining at least one phase shift value between the periodic driving function and the periodic motor response signal and for determining, based on the determined at least one phase shift value, one or several of the following:
(a) an attachment state of the head section, i.e., whether or not the head section is attached to the handle section, which relates to the claimed invention;
(b) a kind or type of the head section being attached to the head section, where at least two different head sections can be distinguished, which is not claimed; and/or
(c) a wear state of the attached head section, e.g., a degree of deformation due to long-term use or a degree of abrasion of mechanically linked elements etc., which is not claimed.

The controller may be arranged for determining the phase shift value between the periodic driving signal and the periodic motor response signal in accordance with at least one of the following concepts (which are understood to be neither limiting nor necessarily complete):
(a) Automatically when the personal care device is being operated.
(b) Automatically at a certain time instant after the toothbrush was switched on, e.g., 10 ms after the personal care device was switched on.
(c) Automatically in a regular manner, e.g., periodically such as every 0.1 seconds or every 1.0 seconds or every 10 seconds etc., when the personal care device is being operated.
(d) When being triggered, e.g., by a user-operable trigger input element such as a button, which may be provided at the handle of the personal care device, or at a touch sensitive input element provided on a separate device such as a smartphone being in data connection with the personal care device.
(e) Automatically while the personal care device is in a wake mode in which the motor of the personal care device is not operating, e.g., at a certain time instant after the wake mode is activated or regularly during the wake mode or when being triggered by a user-operable trigger input element during the wake mode is activated.
(f) In response to an action causing at least one component of the motor to move and to thus induce a signal in another motor component (as is generally described in US 11 058 525 B2) or in a sensor, where the mentioned action may be an attachment or detachment action.

The controller may be structured and/or arranged to provide the periodic driving signal as a pulse width modulated (PWM) signal, i.e., as a sequence of pulses of a supply voltage, where each pulse has an individual length to shape a current flowing through the motor. The average voltage being applied by the PWM signal at the motor may approximate a sinusoidal signal, but other type of periodic signals like a saw-tooth signal, a rectangular signal sequence etc. are also possible. The periodic driving signal in accordance with the invention is dynamically adjusted by the controller to adapt to, e.g., varying loads at the head section to maintain a constant motion amplitude or a constant motion frequency of the driven at least portion of the head section at least approximately. Adaptation of the periodic driving signal is achieved by increasing or decreasing a weighting factor. In case of a PWM signal, the individual lengths of the voltage pulses may be increased or decreased by the weighting factor. The higher the weighting factor, the higher may the energy level become that will be delivered to the motor by the periodic driving function.

The controller may be structured and/or arranged to determine at least one phase shift value between the periodic driving function and a periodic motor response signal, specifically two or more phase-shift values over time. In accordance with some examples, a plurality of phase shift values may be averaged to determine a phase shift value that is less affected by noise or tolerances. The determined phase shift value may be compared with at least one predetermined threshold phase shift value / a reference phase shift value and/or with at least one pre-defined phase shift value target range. The predetermined threshold phase shift value may be set to allow distinguishing whether a head section is attached or not. The predetermined threshold phase shift value may be chosen such that it lies between a phase shift value indicating that no head section is attached and another phase shift value indicating that a specific head section is attached. Alternatively, the predetermined threshold phase shift value may be chosen to lie between a phase shift value indicating that no head section is attached and a cluster of phase shift values relating to the attached state of a plurality of different head sections. The at least one pre-defined phase shift value target range may be chosen such that for a given head section type the target range envelopes ideally all phase shift values that can typically occur due to manufacturing tolerances when making the head sections and/or ideally all phase shift values that can typically occur due to wear effects during a typical lifetime of a given head section type.

The motor of the personal care device may be realized as a resonant motor, e.g., a motor having at least one resonance frequency at which the motor has peak efficiency. A resonant motor may typically comprise a driven armature that is mounted such that it is pushed back from a displaced position into a rest position by a return force, e.g., a spring force. The resonance frequency of such a motor may depend on various parameters defining the resonant system, such as an inertia or momentum of inertia of the driven masses, a total spring constant of one or several springs or other spring-like forces acting in the system to apply a return force on the driven mass, or a total damping of the system. Different head sections have different inertia (different masses), different moments of inertia, different damping and/or different spring constants. Such differences of the head sections lead to differences of the resonant systems that are formed by the motor and the therewith coupled different head sections. To allow an easy differentiation between different head sections, a manufacturer of the head sections may choose to provide different driven masses, may provide different moments of inertia, different damping and/or different spring constants. It is then possible to initiate dedicated actions in case a specific type of head section is determined, e.g., a specific periodic driving signal may be used for a determined type of head section.

The phase shift value may indicate that a worn out or even a broken head section is attached to the handle section. The controller may under such a determination be arranged to at least indicate that the attached head section is, e.g., worn out or the controller may even interrupt operation of the motor and may indicate a danger for the user as the head section may be broken. The controller may then wait for a confirmation signal from the user that operation shall continue.

The following list of examples shall provide some insight into the possibilities of providing different head sections leading to different resonant characteristics of the overall system and thus allowing to differentiate the different head sections due to their clearly separate phase shift values that they cause.
- Changing the driven mass by making walls or other elements thinner or thicker or by providing at least one hole of various sizes into at least one mass element being driven by the motor.
- Changing the total spring constant, e.g., by providing a spring at a driven mass, e.g., a spring for holding the driven mass in a defined rest position.
- Changing the moment of inertia of a driven mass that is driven into rotation or oscillatory rotation by changing the mass distribution with respect to a rotation axis around which the mass is driven.

**In** accordance with some example embodiments of the claimed invention, additionally or alternatively to the previous example embodiments, a plurality of phase shift values is determined in dependence on the weighting factor so that the phase shift values represent - potentially noisy - values of a function in dependence on the weighting factor. One or several sets of pre-determined reference phase shift values in dependence on the weighting factor may be stored in a memory accessible by the controller, e.g., the memory may be part of the controller. The controller may be structured and/or arranged to compare the currently determined set of phase shift values in dependence on the weighting factor with one or more of the stored reference sets allowing determination of, e.g., the type of head section being attached to the handle section and/or the wear state of the attached head section. The weighting factor may basically range from 0% to 100% or may have a lower range value such as 20% and a higher range value such as 99%. It is then understood that a set of phase shift values in dependance on the weighting factor comprises at least two phase-shift values at different weighting factor values, e.g., at a weighting factor value of 34% and at a weighting factor value of 66.2%. A continuous phase shift function may be determined by a fitting algorithm applied on a set of phase shift values.

In accordance with the present disclosure, the motor of the drive unit may specifically be a resonant motor that has a movable motor portion that is spring mounted with respect to the handle section and a stator portion that is fixedly mounted at or with respect to a housing of the handle portion. The movable motor portion may be spring-mounted by means of at least one mounting spring. The spring-mounted movable motor portion can be understood as a spring-mass system having a resonance frequency. The driving frequency may be chosen to coincide with the resonance frequency or to be close to the resonance frequency. The resonance frequency is here understood to be the resonance frequency in the usual use state of the personal care device, i.e., typically with at least a portion of the mass of the head section being a part of the movable mass of the movable motor portion. In other words, the resonance frequency relates to an attached state of a currently used head section. The driving frequency used by the controller to apply the periodic driving signal may be fixed or may in some examples be adaptable as, e.g., the resonance frequency may depend on a force being applied at the head section or as the resonance frequency may change over time due to wear of the head section and/or aging of the drive unit.

The controller may be structured and/or arranged to perform certain steps in response to a determination of the attachment state. E.g., the controller may change the weighting factor from a standard operation value to a predetermined first value that is in particular lower than the standard operational value to avoid noise and vibrations caused by the handle if it is detected that the head section is not attached. Noise and vibrations may specifically occur when the head section is not attached as then the driving frequency and the resonance frequency do not coincide. Generally, a reduction of the motion amplitude may be considered a general improvement in case the head section is missing. The controller may be structured and/or arranged to perform additional or alternate steps in response to a determination that a head section is attached or not. E.g., the control may trigger an indication element to indicate the attachment state and/or the controller may inhibit a time counter relevant for determining usage time of the head section to run when the head section is indeed not attached. It is generally to be understood that the determination of an attachment state may lead to one or several action steps being performed by the personal care device. Indication of the determined attachment state via one or several indication elements may be one of these action steps.

In case that a particular type of head section being attached to the handle section is determined, which is not claimed, the controller may adapt at least one parameter characterizing the driving function. Such parameter may be the weighting factor, the concrete shape of the driving function, the driving frequency etc. In case the resonance frequency changes in dependance on the type of head section being attached, it may be sensible to adapt the driving frequency so that the driving frequency is identical with the resonance frequency or so that a predetermined distance between the driving frequency and the resonance frequency is maintained.

The controller may be structured and/or arranged to cause an indication of the determined attachment state. A visual indicator may be used for each of these indication tasks, e.g., one or a plurality of LEDs provided at the personal care device, or a display provided at the personal care device may be used. In some examples, the indication means may be realized at a device separate to the personal care device, e.g., at a display device such as a mobile phone, tablet, laptop computer, proprietary display device etc. This shall not exclude that alternatively or additionally, the above-mentioned determination may be indicated in a haptic manner by a haptic or tactile indicator, e.g., by a vibrator, and/or by an acoustic indicator such as a loudspeaker or a buzzer.

The controller may be structured and/or arranged to determine the phase shift value(s) at a predetermined location in at least one half-period of the periodic driving signal. While no location shall be excluded, the measurement location may be chosen to lie at about a quarter of the respective half period, i.e., the phase shift value may be measured when about one quarter of the duration of the respective half period has passed so that three quarters of the duration of the half period will follow. Alternatively or additionally, the phase shift value may be determined at about three quarters of the duration of the respective half period.

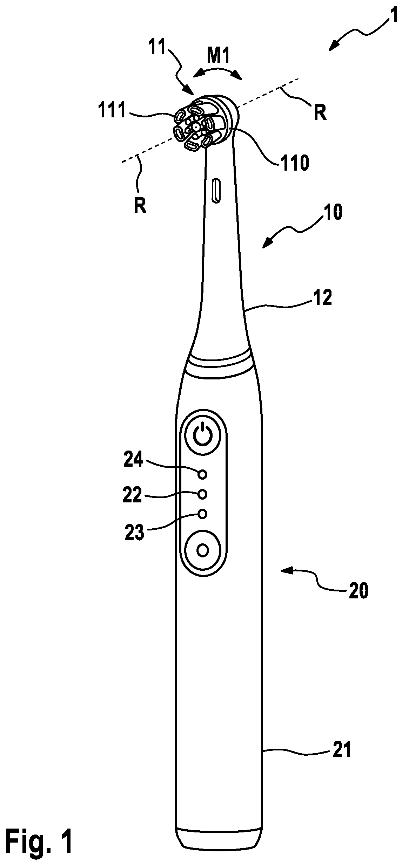

Fig. 1 is a schematic depiction of an example personal care device 1 that is realized as an electric toothbrush. The personal care device 1 has a head section 10 and a handle section 20, where the head section 10 is detachably attached to the handle section 20. The head section 10 may be detachable from the handle section 20 any time, e.g., also during operation of the personal care device 1. In case the head section 10 would be removed during operation, this could cause issues for the user as moving elements of the handle section 20 may injure the user or at least may cause irritation of the user. Even if the potential injury would be basically negligible such as slightly pinched skin, such an event may reduce the attractiveness of the personal care device and preferably should be avoided. As will be explained more in detail below, the personal care device 1 in accordance with the present disclosure is structured and/or arranged to determine the attachment status of the head section 10 by analyzing a periodic motor response signal from a motor disposed in the handle section 20, specifically by analyzing one or several phase shift value(s) between a periodic driving signal provided at the motor and a periodic motor response signal. Once it is detected that the head section 10 was detached from the handle section 20, a controller in accordance with the claimed invention reduces the energy provided at the motor so that the motor moves a drive shaft at a reduced amplitude or frequency so that the mentioned risk of, e.g., pinching skin, is reduced. The personal care device 1 may comprise a first indicator 22 for indicating the attachment status of the head section 10, e.g., the first indicator 22 may be realized as an optical indicator such as an LED that may indicate that the head section 10 is not attached to the handle section 20 by being switched on or off or by a color change or by flashing or the like. Further indicators such as a second indicator 23 and potentially a third indicator 24 may be provided as well to indicate, e.g., a type of the head section 10 being attached to the handle section and/or a wear state of the attached head section 10. While one or all indicators 22, 23 and 24 may be visual indicators, at least one of the indicators 22, 23 or 24 may be realized as a haptic/tactile or audible indicator as already mentioned.

The head section 10, that here is realized as an example brush head of an electric toothbrush, comprises a head 11 that is arranged for being driven into an oscillatory rotation M1 around a rotation axis R with respect to a housing 12 of the head section 10. The housing 12 of the head section 10 is detachably attached to a housing 21 of the handle section 20 and remains fixedly connected during operation so that only the head 11 moves with respect to the housing 21 of the handle section 20 when being driven. In at least one other example embodiment, the complete head section may be driven into motion. The head 11 here comprises a carrier 110 and a plurality of personal care elements 111, which in this example are realized as brush filaments or filament tufts as is known in the art of toothbrushes. Other personal care elements such as elastomeric elements may be used in addition or alternatively. The head section 10 may comprise a motion transmitter for receiving a motion from the handle section 20, e.g., by being coupled with a drive shaft coupled to the motor, and for transferring this motion to the movable head 11.

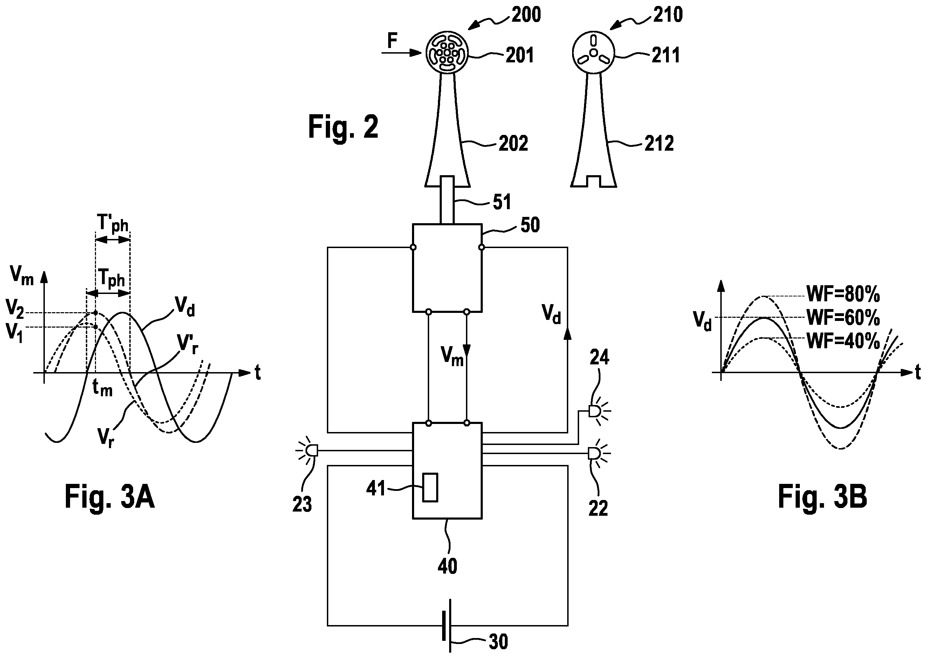

Fig. 2 is a schematic depiction of components of a personal care device as exemplary discussed in connection with Fig. 1. An example personal care device may comprise an energy source 30, a controller 40 and a motor 50 coupled with a drive shaft 51 on which in Fig. 2 a first type head section 200 is attached. A second type head section 210 is shown in a non-attached state to indicate that a kit in accordance with the present disclosure may be formed by a single handle section and two or more head sections 200, 210. The first type head section 200 and the second type head section 210 each have a head 201 and 211, respectively, and a housing 202 and 212, respectively. In operation, a force F may act at the head 201 of the attached head section 200 that leads to a load on the motor 50, which in cause will typically lead to a reduction of the output amplitude delivered by the drive shaft 51 of the motor 50. It may be a target of a motor control to maintain the motion amplitude provided by the drive shaft 51 so that a weighting factor can be used to increase and decrease the energy delivered to the motor 50.

The controller 40 is here connected with the energy source 30 to receive energy for powering the controller 40. Further, the controller 40 may provide energy from the energy source at the motor 50 to drive the motor 50. It is indicated in Fig. 2 that a driving voltage V_{d} is provided at the motor 50. The driving voltage V_{d} may be a periodic driving signal. The voltage V_{d} may be provided by a voltage shaping circuit or the controller 40 may be arranged to apply pulse-width modulated (PWM) voltage pulses as is generally known in the art. The resulting current flowing through the motor 50 may thus be shaped to have an essentially sinusoidal shape. The number of voltage pulses per period of the periodic driving signal may be equal to or more than 8, be equal to or more than 32, be equal to or more than 128 or be equal to or more than 256. The width of each pulse provided per period at the motor 50 (in other words: the on-time of the voltage pulse during its time period) may be a pre-set value stored in a memory 41 of the controller 40. The pre-set values may be given as a digital number having a resolution of, e.g., 4 bit, 6 bit, 8 bit, 10 bit, 12 bit, 16 bit, 20 bit 24 bit or any other sensible resolution.

The pre-set values may be provided for a certain standard height of the PWM-shaped signal. As the energy needed by the motor 50 typically depends on the load on the motor 50, the controller 40 may apply an weighting factor on all the pre-set values to apply a reduced or increased energy level at the motor 50. Just as an example, the manufacturer may have set the pre-set values so that 50% of the maximum peak height of the average voltage signal is achieved in a no-load condition. In case that more energy is needed at the motor 50, the controller 50 may then increase the weighting factor on all pre-set values to achieve a voltage peak value of, e.g., 60% or 72.3% etc. As in this example 50% was the preset standard value, a weighting factor of 1.2 needs to be applied to achieve 60% and a weighting factor of 1.446 needs to be applied to achieve 72.3%. As will be explained in the following in more detail, the controller 40 is arranged to reduce the applied energy at the motor 50 when the controller 40 detects that the head section 200 was removed from the handle section. The reduced peak value may then be 20% and a respective weighting factor of, e.g., 0.4 for a standard value of 50%, will then be applied on the pre-set values.

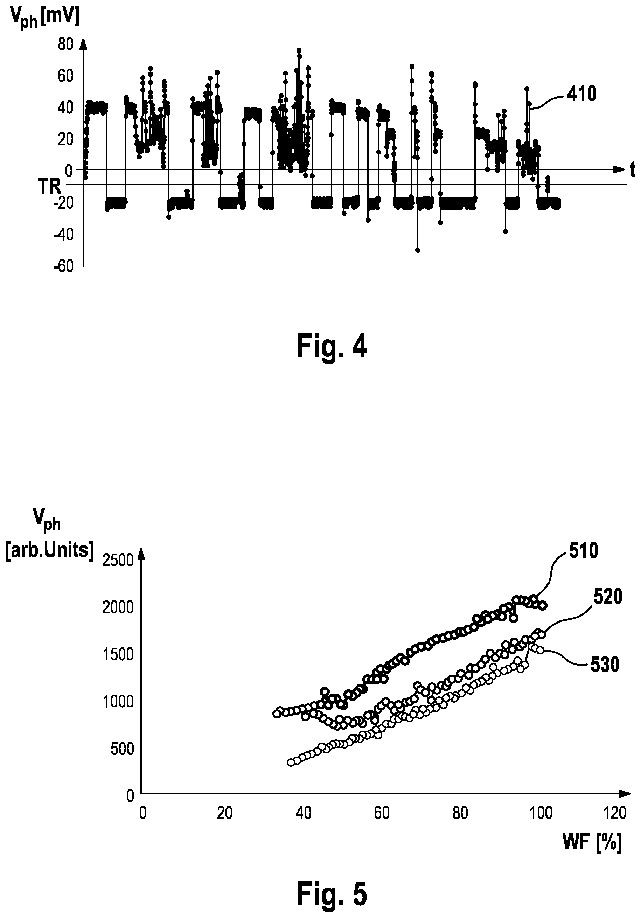

In accordance with the present disclosure, the controller 40 may be arranged to sample a periodic motor response signal Vᵣ, e.g., the current flowing through the motor 50 or a voltage induced by a moving motor part in a static motor part of the motor 50 such as the back-electromagnetic force (B-EMF) or a voltage induced by a moving motor part into a separate sensor device such as a separate coil. The periodic motor response signal Vᵣ typically is phase-shifted with respect to the periodic driving voltage V_{d}, which is shown in Fig. 3A, where the phase shift value is indicated by Tₚₕ. It has been found that the phase shift value Tₚₕ between the periodic motor response signal Vᵣ and the periodic driving signal V_{d} changes in a deterministic manner when the attachment state of the head section 200 on the handle section changes - see Fig. 4 and the respective description further below. While typically less strong, the phase shift value Tₚₕ also changes in a deterministic manner for different types of head sections and even for different wear states of head sections. It is indicated in Fig. 3A that two different head sections may cause two different motor response functions Vᵣ and V'ᵣ that each have a different phase shift value Tₚₕ and T'ₚₕ, respectively.

As the phase shift value Tₚₕ changes less significantly for different types of head sections or with changing wear state, the phase shift value Tₚₕ may be assembled over time to average the measurements and preferably also to determine the phase shift value Tₚₕ for different weighting factors. The latter is discussed further below with reference to Fig. 5.

As was already explained, Fig. 3A is a schematic depiction of the voltage Vₘ of the periodic driving signal V_{d} and of the periodic motor response signal Vᵣ over time t. The phase shift value Tₚₕ between V_{d} and Vᵣ is indicated. It should be understood that the point in time at which the periodic driving signal V_{d} reaches its maximum is known by definition. It should also be understood that the periodic motor response signal Vᵣ does not need to be measured over the complete period but that it is sufficient, e.g., to measure just a portion in which the peak is expected. Instead of determining the temporal distance between peak signals of the like, the phase shift value can also be determined by measuring the periodic motor response signal only a given time instant tₘ within the period of the periodic driving voltage V_{d}. It is indicated that the periodic motor response signal V_{d} has a voltage value V₁ at the measurement instant tₘ and that a shifted periodic motor response signal V'ᵣ has a measured voltage value V₂ at the measurement time instant tₘ. After a calibration the controller 40 is then enabled to determine the phase shift value T'ₚₕ based on the voltage value V₂. It has been found that good results can be achieved if the measurement instant tₘ is located at about ¼ or about ¾ of a half period of the periodic driving signal V_{d}.

Fig. 3B schematically indicates the periodic driving signal V_{d} being applied at the motor under three different weighting factors, WF=40%m WF=60%, and WF= 80%. It is here assumed that the driving frequency remains constant. It shall be understood that in some embodiments the driving frequency may be adapted, e.g., in dependence on the load on the head section or in dependence on the head section type etc. Three different curves are indicated for the periodic driving signal for three different weighting factors WF, namely for WF = 80%, WF = 60%, and WF = 40%. The periodic driving signal is used to provide the necessary energy to the motor. That means that more energy is delivered to the motor if the periodic driving signal has a higher peak voltage at otherwise identical shape, i.e., when the periodic driving signal is increased by a weighting factor WF. The periodic driving signal for a motor under the condition that the driven head section of the personal care device is not loaded may be the periodic driving signal shown for WF = 40%. Depending on the load and to, e.g., maintain the motor amplitude under different loads, the weighting factor may then be increased - and successively be decreased if the load drops again.

Fig. 4 is a depiction of a measurement curve 410 of the phase shift value Vₚₕ (measured in millivolts) between the periodic driving signal and a periodic motor response signal over time. An Oral-B iO toothbrush was used as personal care device. During the measurement period, the head section was repeatedly manually removed from the handle section - the periods without the head section are identified by having phase shift values of about -20 mV (the absolute voltage values are arbitrary). The phase shift value Vₚₕ in the periods with attached head section depends on the load state of the head section. A threshold phase shift value of, e.g., TR = -10 mV may be applied to differentiate a state in which the head section is detached and a state in which the head section is attached. As was explained, the controller may be arranged to determine whether the head section is attached or not and (a) may indicate that the head section is detached and/or (b) may reduce the weighting factor WF to a lower value, e.g., to a value in a range of between 1% and 35% such as 5% or 10% or 15% or 20% or any other value. Reduction of the overall weight factor leads, inter alia, to a reduction of the amplitude of the drive shaft to which the head section is coupled and also of the noise of the handle section. Once a head section is again attached to the handle section, the controller may be arranged to set the weighting factor back again to the no-load start value, e.g., WF = 40%. Instead of switching the weighting factor in one go, the controller may be arranged to slidingly change the weighting factor from the value applied when no head section is attached to the no-load weighting factor, e.g., to linearly and slidingly change the value from 5% to 40% within a certain time frame, e.g., within a time window of 1 second or within a time frame of, e.g., 5 seconds. Instead of instantaneously switching the weighting factor, the controller may be arranged to apply a delay period between the point in time when the attachment of the head section is determined and the point in time when the weighting factor is switched. This may allow a user to move the fingers away from the head section before it is driven at regular speed.

Fig. 5 is a depiction of three measurement curves 510, 520, and 530 of the phase shift value Vₚₕ (given in arbitrary units) in dependence on the weighting factor WF given in %. The three different curves 510, 520, and 530 relate to different types of head sections, e.g., the personal care device may be an electric toothbrush and the three different head sections may then be three different brush heads, e.g., a standard cleaning head, a sensitive cleaning head and an interdental cleaning head. While a single measurement of a phase shift value Vₚₕ may not be reliable enough to differentiate between the various head sections that may be attached to the handle section, the differentiation may be enabled in case of determining a curve of phase shift values in dependance on the weighting factor WF. The controller may be arranged to compare the acquired phase shift values for the attached head section with one, two, three or more stored reference sets of phase shift values to determine the type of the attached head section. The controller may be arranged to indicate the type of head section that is attached once the type of the head section is determined.

Similar to the above discussion relating to Fig. 5, the wear state of the attached head section may be determined. Respective reference curves or reference sets of phase shift values in dependance on the weighting factor may be stored. The controller may then be arranged to compare a set of currently determined phase shift values with one or several of the reference curves or reference sets of phase shift values to determine the wear state of the attached head section. The controller may further be arranged to indicate the determined wear state or to indicate when the wear state has passed over a predetermined wear state threshold over which it may be advisable to replace the head section with a new head section.

## Claims

1. A personal care device (1) comprising:
a handle section (20) allowing a user to grasp the personal care device (1) with a hand;
a head section (10) for providing a personal care treatment to a personal care area, the head section (10) being detachably attached to the handle section (20);
a drive unit (50) comprising a motor for driving at least a portion of the head section (10) into motion;
a controller (40) arranged and/or structured for
- providing a periodic driving signal (V_{d}) at the motor;
- determining at least one phase shift value (Tₚₕ) between the periodic driving signal (V_{d}) and a periodic motor response signal (Vᵣ); and
- determining, based on the determined phase shift value (Tₚₕ) whether the head section (10) is attached to the handle section (20);
wherein the periodic driving signal (V_{d}) is adaptable by a controllable weighting factor (WF) and the weighting factor (WF) is dynamically set by the controller (40) to at least approximately maintain a motion amplitude of the at least portion of the head section (10) being driven into motion;
wherein the controller (40) is structured and/or arranged to reduce the weighting factor (WF) to a predetermined first value in case the controller (40) determines that the head section (10) is not attached to the handle section (20).

2. The personal care device in accordance with claim 1, wherein the periodic motor response signal (Vᵣ) is at least one of the following:
- a current flowing through the motor; or
- a voltage across the motor; or
- a voltage between a motor terminal and a reference voltage; or
- a signal induced by at least a portion of the motor in a sensor.

3. The personal care device in accordance with claim 1 or claim 2, wherein the controller (40) is structured and/or arranged to provide the periodic driving signal (V_{d}) as a pulse width modulated signal.

4. The personal care device in accordance with anyone of claims 1 to 3, wherein the controller (40) is structured and/or arranged to determine a plurality of phase-shift values in dependance on the weighting factor (WF).

5. The personal care device in accordance with anyone of claims 1 to 4, wherein the controller (40) is structured and/or arranged to determine the attachment state of the head section (10) by comparing the at least one determined phase-shift value (Tₚₕ) with at least one reference phase shift value or predetermined threshold value.

6. The personal care device in accordance with claim 5, wherein the determined phase shift value (Tₚₕ) is computed by averaging or taking into account a plurality of phase shift values.

7. The personal care device in accordance with anyone of claims 1 to 6, wherein the motor of the drive unit (50) is a resonant motor comprising a spring-mounted armature and a stator, the spring-mounted armature having a resonance frequency and the drive frequency being essentially identical with the resonance frequency.

8. The personal care device in accordance with anyone of claims 1 to 7, wherein the controller (40) is structured and/or arranged to indicate the attachment state of the head section (10) by an indicator.

9. The personal care device in accordance with anyone of claims 1 to 8, wherein the phase shift value (Tₚₕ) is determined at a predetermined location within a period of the periodic driving signal.

10. The personal care device in accordance with claim 9, wherein the phase shift value (Tₚₕ) is determined at about one quarter of a half period of the periodic driving signal (V_{d}).

11. The personal care device in accordance with anyone of claims 1 to 10, wherein the periodic driving signal (V_{d}) is an essentially sinusoidal driving signal.

12. The personal care device in accordance with anyone of claims 1 to 11, wherein the controller (40) is structured and/or arranged to determine the phase shift value (Tₚₕ) in response to a user-operable trigger signal.

## Patentansprüche

1. Körperpflegevorrichtung (1), umfassend:
einen Griffabschnitt (20), der einem Benutzer ermöglicht, die Körperpflegevorrichtung (1) mit einer Hand zu ergreifen;
einen Kopfabschnitt (10) zum Bereitstellen einer Körperpflegebehandlung an einem Körperpflegebereich, wobei der Kopfabschnitt (10) an dem Griffabschnitt (20) lösbar befestigt ist;
eine Antriebseinheit (50), umfassend einen Motor zum Antreiben wenigstens eines Anteils des Kopfabschnitts (10) in eine Bewegung;
eine Steuerung (40), die angeordnet und/oder strukturiert ist zum
- Bereitstellen eines periodischen Antriebssignals (V_{d}) an dem Motor;
- Bestimmen wenigstens eines Phasenverschiebungswerts (Tₚₕ) zwischen dem periodischen Antriebssignal (V_{d}) und einem periodischen Motorantwortsignal (Vr); und
- Bestimmen, basierend auf dem bestimmten Phasenverschiebungswert (Tₚₕ), ob der Kopfabschnitt (10) an dem Griffabschnitt (20) befestigt ist;
wobei das periodische Antriebssignal (V_{d}) durch einen steuerbaren Gewichtungsfaktor (WF) anpassbar ist und der Gewichtungsfaktor (WF) durch die Steuerung (40) dynamisch eingestellt wird, um eine Bewegungsamplitude des wenigstens Anteils des Kopfabschnitts (10), der in eine Bewegung angetrieben wird, wenigstens ungefähr aufrechtzuerhalten;
wobei die Steuerung (40) strukturiert und/oder angeordnet ist, um den Gewichtungsfaktor (WF) auf einen zuvor bestimmten ersten Wert zu reduzieren, in einem Fall, dass die Steuerung (40) bestimmt, dass der Kopfabschnitt (10) nicht an dem Griffabschnitt (20) befestigt ist.

2. Körperpflegevorrichtung nach Anspruch 1, wobei das periodische Motorantwortsignal (Vᵣ) wenigstens eines der folgenden ist:
- ein Strom, der durch den Motor fließt; oder
- eine Spannung über dem Motor hinweg; oder
- eine Spannung zwischen einem Motoranschluss und einer Referenzspannung; oder
- ein Signal, das durch wenigstens einen Anteil des Motors in einem Sensor induziert wird.

3. Körperpflegevorrichtung nach Anspruch 1 oder 2, wobei die Steuerung (40) strukturiert und/oder angeordnet ist, um das periodische Antriebssignal (V_{d}) als ein pulsbreitenmoduliertes Signal bereitzustellen.

4. Körperpflegevorrichtung nach einem der Ansprüche 1 bis 3, wobei die Steuerung (40) strukturiert und/oder angeordnet ist, um eine Vielzahl von Phasenverschiebungswerten in Abhängigkeit von dem Gewichtungsfaktor (WF) zu bestimmen.

5. Körperpflegevorrichtung nach einem der Ansprüche 1 bis 4, wobei die Steuerung (40) strukturiert und/oder angeordnet ist, um den Befestigungszustand des Kopfabschnitts (10) durch ein Vergleichen des wenigstens einen bestimmten Phasenverschiebungswerts (Tₚₕ) mit wenigstens einem Referenzphasenverschiebungswert oder einem zuvor bestimmten Schwellenwert zu bestimmen.

6. Körperpflegevorrichtung nach Anspruch 5, wobei der bestimmte Phasenverschiebungswert (Tₚₕ) durch ein Mitteln oder ein Berücksichtigen einer Vielzahl von Phasenverschiebungswerten berechnet wird.

7. Körperpflegevorrichtung nach einem der Ansprüche 1 bis 6, wobei der Motor der Antriebseinheit (50) ein Resonanzmotor ist, umfassend einen federmontierten Anker und einen Stator, wobei der federmontierte Anker eine Resonanzfrequenz aufweist und die Antriebsfrequenz im Wesentlichen identisch mit der Resonanzfrequenz ist.

8. Körperpflegevorrichtung nach einem der Ansprüche 1 bis 7, wobei die Steuerung (40) strukturiert und/oder angeordnet ist, um den Befestigungszustand des Kopfabschnitts (10) durch einen Indikator anzuzeigen.

9. Körperpflegevorrichtung nach einem der Ansprüche 1 bis 8, wobei der Phasenverschiebungswert (Tₚₕ) an einer zuvor bestimmten Stelle innerhalb einer Periode des periodischen Antriebssignals bestimmt wird.

10. Körperpflegevorrichtung nach Anspruch 9, wobei der Phasenverschiebungswert (Tₚₕ) bei etwa einem Viertel einer halben Periode des periodischen Antriebssignals (V_{d}) bestimmt wird.

11. Körperpflegevorrichtung nach einem der Ansprüche 1 bis 10, wobei das periodische Antriebssignal (V_{d}) ein im Wesentlichen sinusförmiges Antriebssignal ist.

12. Körperpflegevorrichtung nach einem der Ansprüche 1 bis 11, wobei die Steuerung (40) strukturiert und/oder angeordnet ist, um den Phasenverschiebungswert (Tₚₕ) als Reaktion auf ein benutzerbetätigbares Auslösesignal zu bestimmen.

## Revendications

1. Dispositif de soins personnels (1) comprenant :
une section de poignée (20) permettant à un utilisateur de saisir le dispositif de soins personnels (1) avec une main ;
une section de tête (10) permettant de fournir un traitement de soins personnels à une zone de soins personnels, la section de tête (10) étant fixée de manière détachable à la section de poignée (20) ;
une unité d'entraînement (50) comprenant un moteur permettant d'entraîner au moins une partie de la section de tête (10) en mouvement ;
un dispositif de commande (40) agencé et/ou structuré pour
- fournir un signal d'entraînement périodique (V_{d}) au niveau du moteur ;
- détermination au moins une valeur de déphasage (Tₚₕ) entre le signal d'entraînement périodique (V_{d}) et un signal périodique de réponse de moteur (Vᵣ) ; et
- déterminer, en fonction de la valeur de déphasage (Tₚₕ) déterminée, si la section de tête (10) est fixée à la section de poignée (20) ;
dans lequel le signal d'entraînement périodique (V_{d}) est ajustable par un facteur de pondération (WF) commandable et le facteur de pondération (WF) est réglé dynamiquement par le dispositif de commande (40) pour maintenir au moins approximativement une amplitude de mouvement au moins de la partie de la section de tête (10) étant entraînée en mouvement ;
dans lequel le dispositif de commande (40) est structuré et/ou agencé pour réduire le facteur de pondération (WF) à une première valeur prédéterminée dans un cas où le dispositif de commande (40) détermine que la section de tête (10) n'est pas fixée à la section de poignée (20).

2. Dispositif de soins personnels selon la revendication 1, dans lequel le signal périodique de réponse de moteur (Vᵣ) est au moins l'un parmi les suivants :
- un courant circulant à travers le moteur ; ou
- une tension à travers le moteur ; ou
- une tension entre une borne de moteur et une tension de référence ; ou
- un signal induit par au moins une partie du moteur dans un capteur.

3. Dispositif de soins personnels selon la revendication 1 ou la revendication 2, dans lequel le dispositif de commande (40) est structuré et/ou agencé pour fournir le signal d'entraînement périodique (V_{d}) en tant que signal modulé en largeur d'impulsion.

4. Dispositif de soins personnels selon l'une quelconque des revendications 1 à 3, dans lequel le dispositif de commande (40) est structuré et/ou agencé pour déterminer une pluralité de valeurs de déphasage en dépendance du facteur de pondération (WF).

5. Dispositif de soins personnels selon l'une quelconque des revendications 1 à 4, dans lequel le dispositif de commande (40) est structuré et/ou agencé pour déterminer l'état de fixation de la section de tête (10) en comparant l'au moins une valeur de déphasage déterminée (Tₚₕ) à au moins une valeur de déphasage de référence ou à une valeur seuil prédéterminée.

6. Dispositif de soins personnels selon la revendication 5, dans lequel la valeur de déphasage déterminée (Tₚₕ) est calculée en établissant la moyenne ou en tenant compte d'une pluralité de valeurs de déphasage.

7. Dispositif de soins personnels selon l'une quelconque des revendications 1 à 6, dans lequel le moteur de l'unité d'entraînement (50) est un moteur résonant comprenant un induit monté sur ressort et un stator, l'induit monté sur ressort ayant une fréquence de résonance et la fréquence d'entraînement étant sensiblement identique à la fréquence de résonance.

8. Dispositif de soins personnels selon l'une quelconque des revendications 1 à 7, dans lequel le dispositif de commande (40) est structuré et/ou agencé pour indiquer l'état de fixation de la section de tête (10) par un indicateur.

9. Dispositif de soins personnels selon l'une quelconque des revendications 1 à 8, dans lequel la valeur de déphasage (Tₚₕ) est déterminée au niveau d'une localisation prédéterminée au sein d'une période du signal d'entraînement périodique.

10. Dispositif de soins personnels selon la revendication 9, dans lequel la valeur de déphasage (Tₚₕ) est déterminée à environ un quart d'une demi-période du signal d'entraînement périodique (V_{d}).

11. Dispositif de soins personnels selon l'une quelconque des revendications 1 à 10, dans lequel le signal d'entraînement périodique (V_{d}) est un signal d'entraînement sensiblement sinusoïdal.

12. Dispositif de soins personnels selon l'une quelconque des revendications 1 à 11, dans lequel le dispositif de commande (40) est structuré et/ou agencé pour déterminer la valeur de déphasage (Tₚₕ) en réponse à un signal de déclenchement actionnable par l'utilisateur.
